# EUROPÄISCHE PATENTSCHRIFT

(11) **EP 1 419 922 B1**
(45) Veröffentlichungstag und Bekanntmachung des Hinweises auf die Patenterteilung: **12.04.2006**
(21) Anmeldenummer: 03024150.9
(22) Anmeldetag: 20.10.2003
(51) Int. Cl.: B60K 11/04, F28F 9/00, F16B 5/06, F16B 21/08

(54) **Befestigungsvorrichtung für ein Kühlmodul an einem Fahrzeugrahmen**
Mounting structure for cooling module to a vehicle frame
Dispositif de fixation d'un module de refroidissement au châssis d'un véhicule

(30) Priorität: 12.11.2002 DE 10252879
(43) Veröffentlichungstag der Anmeldung: 19.05.2004
(73) Patentinhaber: Behr GmbH & Co. KG, 70469 Stuttgart (DE)
(72) Erfinder: Boullin, Arnaud, 70195 Stuttgart (DE); von Lützau, Frank, 73661 Berglen (DE); Wright, David, 71737 Kirchberg (DE)
(74) Vertreter: Grauel, Andreas

(56) Entgegenhaltungen:
- EP-A- 0 128 878
- US-A- 4 773 496
- US-A- 5 911 936
- PATENT ABSTRACTS OF JAPAN vol. 2000, no. 05, 14. September 2000 (2000-09-14) -& JP 2000 038038 A (TOYOTA MOTOR CORP), 8. Februar 2000 (2000-02-08)
- PATENT ABSTRACTS OF JAPAN vol. 017, no. 212 (M-1402), 26. April 1993 (1993-04-26) -& JP 04 353046 A (TOYOTA AUTOM LOOM WORKS LTD), 8. Dezember 1992 (1992-12-08)

## Beschreibung

Die Erfindung betrifft eine Befestigungsvorrichtung, insbesondere zur Befestigung eines Kühlmoduls an einem Fahrzeugrahmen, gemäß dem Oberbegriff des Anspruchs 1.

Herkömmliche Befestigungsvorrichtungen zur Befestigung von Kühlmodulen an Fahrzeugrahmen werden aus Metall gefertigt und müssen bei der Montage aufwendig vernietet werden, so dass die Herstellungskosten relativ hoch sind. Eine Befestigungsvorrichtung, welche die Merkmale des Oberbegriffs des Anspruchs 1 beinhaltet, ist in der US-A-5 911 936 gezeigt.

Es ist Aufgabe der Erfindung, eine verbesserte Befestigungsvorrichtung zur Verfügung zu stellen.

Diese Aufgabe wird gelöst durch eine Befestigungsvorrichtung, insbesondere zur Befestigung eines Kühlmoduls an einem Fahrzeugrahmen, mit den Merkmalen des Anspruchs 1. Vorteilhafte Ausgestaltungen sind Gegenstand der Unteransprüche.

Erfindungsgemäß ist ein Befestigungselement Bestandteil der Befestigungsvorrichtung, welches als Kunststoffteil, insbesondere als Kunststoff-Spritzgussteil, ausgebildet ist. Dies ermöglicht eine sehr preisgünstige Herstellung. Die Befestigungsvorrichtung ist zweiteilig ausgebildet, wobei mit dem Befestigungselement ein Dämpfungselement zusammenwirkt, welches im Befestigungselement aufgenommen ist. Durch das Vorsehen eines Kunststoffteiles kann ferner Gewicht eingespart werden, so dass die gesamte Anordnung etwas leichter ist.

Ausserdem weist die Befestigungsvorrichtung mindestens eine Clipsverbindung, besonders bevorzugt zwei Clipsverbindungen, auf. Clipsverbindungen ermöglichen eine schnelle und einfache Montage, für die keine Hilfsmittel, also keine speziellen Werkzeuge, erforderlich sind.

Hierbei ist bevorzugt eine Clipsverbindung zwischen Befestigungselement und Dämpfungselement und die zweite Clipsverbindung zwischen Befestigungselement und Halteelement ausgebildet.

Vorzugsweise weist die Befestigungsvorrichtung einen hohlzylindrischen Bereich zur Aufnahme eines Stiftes auf, welcher am Fahrzeugrahmen angebracht ist. Hierfür ist sowohl das Befestigungselement als auch das in diesem angeordnete Dämpfungselement zumindest bereichsweise hohlzylindrisch ausgebildet.

Im Folgenden wird die Erfindung anhand eines Ausführungsbeispiels unter Bezugnahme auf die Zeichnung im Einzelnen erläutert. In der Zeichnung zeigen:
- Fig. 1: eine Zusammenbauzeichnung einer erfindungsgemäßen Befestigungsvorrichtung,
- Fig. 2: eine Explosionsdarstellung der Befestigungsvorrichtung von Fig. 1,
- Fig. 3: ein Befestigungselement der Befestigungsvorrichtung von Fig. 1 in Alleinstellung,
- Fig. 4: eine andere Ansicht des Befestigungselements von Fig. 3, und
- Fig. 5: einen Schnitt durch das Befestigungselement von Fig. 3

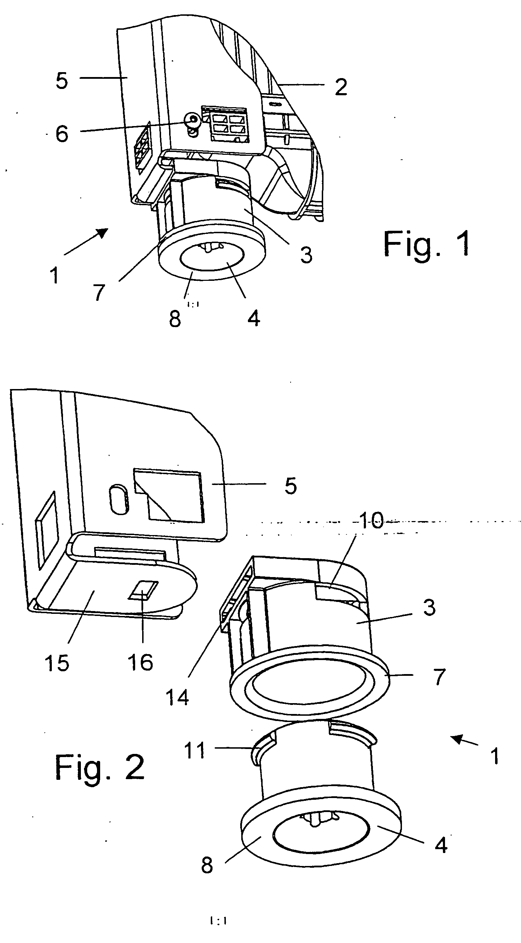

Eine Befestigungsvorrichtung 1 dient zur Befestigung eines Kühlmoduls 2, welches in Fig. 1 nur schematisch angedeutet ist, an einem Fahrzeugrahmen. Die Befestigungsvorrichtung 1 weist ein im Wesentlichen hohlzylinderförmiges, auf einer Seite offenes Befestigungselement 3 und ein hierin angeordnetes, ebenfalls im Wesentlichen hohlzylindrisches Dämpfungselement 4 auf.

Dabei wirkt das Befestigungselement 3 einerseits mit einem Halteelement 5, welches am Kühlmodul 2 mittels Schrauben 6 angebracht ist, und andererseits mit einem am Fahrzeugrahmen vorgesehenen runden Metallstift (nicht dargestellt) zusammen, der in das hohlzylindrische Dämpfungselement 4 und somit auch in das Befestigungselement 3 eingeführt ist. Beim Befestigungselement 3 handelt es sich um ein Kunststoff-Spritzgussteil, beim Dämpfungselement 4 um ein Gummiteil und beim Halteelement 5 um ein gestanztes Blechbiegeteil aus Metall.

Das Befestigungselement 3 ist zur Erhöhung der Stabilität an seiner offenen Seite mit einem umlaufenden Flansch 7 versehen. Der Flansch 7 des Befestigungselements 3 wird im zusammengebauten Zustand von einem Rand 8 des Dämpfungselements 4 stirnseitig abgedeckt (vgl. Fig. 1) und dadurch geschützt. Ferner verhindert der Rand 8 eine direkte Anlage und optimiert daher die Dämpfung.

Um das Dämpfungselement 4 im Befestigungselement 3 fixiert und positioniert zu halten, sind im Befestigungselement 3 in der Nähe von dessen verschlossener Seite drei schlitzförmige Öffnungen 10 vorgesehen, welche äquidistant in einer Reihe um den Umfang des Befestigungselements 3 angeordnet sind. Zum Hintergreifen, d.h. zum Eingriff in diese Öffnungen 10 in Art einer Clipsverbindung, weist das Dämpfungselement 4 seinerseits drei Vorsprünge 11 auf, welche entsprechend den Öffnungen 10 in der Nähe des einen Endes des Dämpfungselements 4 angeordnet sind. Die Funktion eines Federarms, der üblicherweise bei Clipsverbindungen vorgesehen ist, übernimmt im vorliegenden Fall der hohlzylindrische Bereich des Dämpfungselements 4, welcher auf Grund seiner Dämpfungsfunktion elastisch ausgebildet ist.

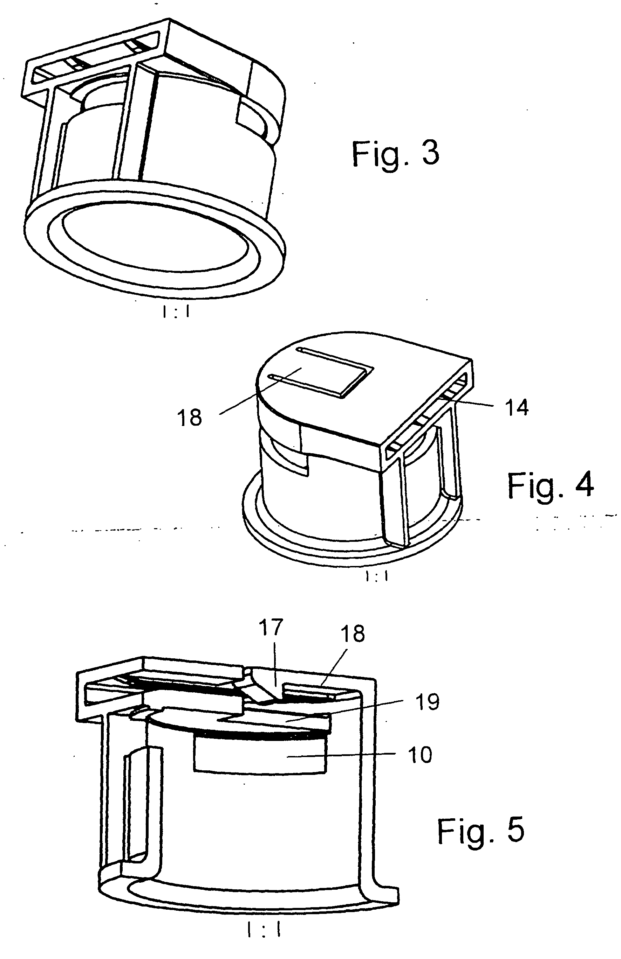

Zur Verbindung des Befestigungselements 3 am Halteelement 5 ist im Befestigungselement eine Aufnahme 14 vorgesehen, in die eine Zunge 15 des Halteelements 5 eingeführt wird. Die Fixierung der Zunge 15 im Befestigungselement 3 erfolgt mittels einer Clipsverbindung für welche in der Zunge 15 eine Öffnung 16 vorgesehen ist, in welche ein hakenförmiges Ende 17 eines Federarms 18 (vgl. Fig. 5) eingreift. Der Federarm 18 ist Teil der Aufnahme 14. Im dem Federarm 18 gegenüberliegenden Teil der Aufnahme 14 ist eine Öffnung 19 vorgesehen, welche eine optimale Ausgestaltung des hakenförmigen Endes 17 des Federarms 18 ermöglicht und ein Anliegen des hakenförmigen Endes 17 an der entsprechenden Seitenfläche der Aufnahme 14 verhindert, so dass eine sichere Clipsverbindung gewährleistet werden kann.

Für die Montage der Befestigungsvorrichtung 1 wird das Dämpfungselement 4 in das Befestigungselement 3 eingesetzt, bis es verrastet. Anschließend wird die derart vorbereitete Befestigungsvorrichtung 1 mit der Aufnahme 14 über die Zunge 15 des bereits am Kühlmodul 2 befestigten Halteelements 5 eingeführt, bis eine Verrastung erfolgt, d.h. eine Einhandmontage ohne Hilfsmittel ist möglich. Für den Einbau im Kraftfahrzeug erfolgt eine Positionierung und ein Aufsetzen der Befestigungsvorrichtung 1 auf dem am Fahrzeugrahmen vorgesehenen Metallstift, welcher anschließend in das Dämpfungselement 4 und somit auch in das Befestigungselement 3 eingeführt wird.

### Bezugszeichenliste

- 1: Befestigungsvorrichtung
- 2: Kühlmodul
- 3: Befestigungselement
- 4: Dämpfungselement
- 5: Halteelement
- 6: Schraube
- 7: Flansch
- 8: Rand
- 10: Öffnung
- 11: Vorsprung
- 14: Aufnahme
- 15: Zunge
- 16: Öffnung
- 17: Ende
- 18: Federarm
- 19: Öffnung

## Patentansprüche

1. Befestigungsvorrichtung (1) mit einem Halteelement (5) insbesondere zur Befestigung eines Kühlmoduls (2) an einem Fahrzeugrahmen, wobei das Külmodul (2) an dem Halteelement (5) befestigbar ist und die Befestigungsvorrichtung (1) ein Befestigungselement (3) aus Kunststoff aufweist, die Befestigungsvorrichtung (1) zweiteilig ausgebildet ist, wobei Befestigungselement (3) mit einem Dämpfungselement (4) zusammenwirkt, und wobei das Dämpfungselement (4) im Befestigungselement (3) aufgenommen ist und das Halteelement (5) eine Zunge (15) aufweist, welche mit einer Aufnahme (14) der Befestigungsvorrichtung (1) zusammenwirkt, **dadurch gekennzeichnet, dass** das Halteelement (5) eine Öffnung (16) und die Befestigungsvorrichtung eine Hinterschneidung (17) zur Bildung einer Clipsverbindung aufweist und die Öffnung (16) in der Zunge (15) und die Hinterschneidung (17) an einem Federarm (18) des Befestigungselements (3) vorgesehen ist.

2. Befestigungsvorrichtung nach Anspruch 1, **dadurch gekennzeichnet, dass** das Befestigungselement (3) ein Kunststoff-Spritzgussteil ist.

3. Befestigungsvorrichtung nach einem der vorhergehenden Ansprüche, **dadurch gekennzeichnet, dass** die Befestigungsvorrichtung (1) mindestens eine Clipsverbindung aufweist.

4. Befestigungsvorrichtung nach einem der vorhergehenden Ansprüche, **dadurch gekennzeichnet, dass** die Befestigungsvorrichtung (1) einen hohlzylindrischen Bereich zur Aufnahme eines Stiftes aufweist.

5. Befestigungsvorrichtung nach Anspruch 4, **dadurch gekennzeichnet, dass** das Befestigungselement (3) im Wesentlichen zylinderförmig ausgebildet ist.

6. Befestigungsvorrichtung nach Anspruch 4 oder 5, **dadurch gekennzeichnet, dass** das Dämpfungselement im Wesentlichen zylinderförmig ausgebildet ist und koaxial im Befestigungselement (3) angeordnet ist.

7. Befestigungsvorrichtung nach einem der vorhergehenden Ansprüche, **dadurch gekennzeichnet, dass** das Befestigungselement (3) Öffnungen (10) aufweist, welche mit Vorsprüngen (11) des Dämpfungselements (4) zur Bildung einer Clipsverbindung und/oder eines Formschlusses zusammenwirken.

8. Befestigungsvorrichtung nach Anspruch 7, **dadurch gekennzeichnet, dass** das Befestigungselement (3) mindestens zwei Öffnungen (10) aufweist.

9. Befestigungsvorrichtung nach Anspruch 7 oder 8, **dadurch gekennzeichnet, dass** das Befestigungselement (3) drei äquidistant über den Umfang verteilte, in einer Reihe angeordnete Öffnungen (10) aufweist.

10. Befestigungsvorrichtung nach einem der vorhergehenden Ansprüche, **dadurch gekennzeichnet, dass** das Halteelement (5) ein Metall-Biegeteil ist.

11. Befestigungsvorrichtung einem der vorhergehenden Ansprüche, **dadurch gekennzeichnet, dass** das Befestigungselement (3) einen Flansch (7) aufweist.

12. Befestigungsvorrichtung einem der vorhergehenden Ansprüche, **dadurch gekennzeichnet, dass** das Dämpfungselement (4) einen Rand (8) aufweist.

## Claims

1. Fixing device (1) with a retaining element (5) for fixing a cooling unit (2) to a vehicle frame wherein the cooling unit (2) is adapted to be fixed to the retaining element (5) and the fixing device (1) comprises a fixing element made of plastic, the fixing device (1) is constructed in two parts wherein the fixing element (3) cooperates with an absorbing element (4) and wherein the absorbing element (4) is received in the fixing element (3) and the retaining element (5) has a tongue (15) which cooperates with a receiving member (14) of the fixing device (1), **characterised in that** the retaining element (5) has an opening (16) and the fixing device has an undercut member (17) for forming a clip connection and the opening (16) is provided in the tongue (15) and the undercut member (17) is provided on a spring arm (18) of the fixing element (3).

2. Fixing device according to claim 1, **characterised in that** the fixing element (3) is a plastic injection moulded component.

3. Fixing device according to one of the preceding claims, **characterised in that** the fixing device (1) has at least one clip connection.

4. Fixing device according to one of the preceding claims, **characterised in that** the fixing device (1) has a hollow cylindrical region for receiving a pin.

5. Fixing device according to claim 4, **characterised in that** the fixing element (3) is essentially cylindrical.

6. Fixing device according to claim 4 or 5,
**characterised in that** the absorbing element is essentially cylindrical and is arranged coaxially in the fixing element (3).

7. Fixing device according to one of the preceding claims, **characterised in that** the fixing element (3) has openings (10) which cooperate with projections (11) of the absorbing element (4) to form a clip connection and / or a shape-locking connection.

8. Fixing device according to claim 7, **characterised in that** the fixing element (3) has at least two openings (10).

9. Fixing device according to claim 7 or 8, **characterised in that** the fixing element (3) has three openings (10) arranged in series and distributed equidistantly around the periphery.

10. Fixing device according to one of the preceding claims, **characterised in that** the retaining element (5) is a flexible metal part.

11. Fixing device according to one of the preceding claims, **characterised in that** the fixing element (3) comprises a flange (7).

12. Fixing device according to one of the preceding claims, **characterised in that** the absorbing element (4) comprises a rim (8).

## Revendications

1. Dispositif de fixation (1) avec un élément de retenue (5), en particulier pour la fixation d'un module de refroidissement (2) sur un châssis de véhicule, le module de refroidissement (2) pouvant être fixé sur l'élément de retenue (5) et le dispositif de fixation (1) présentant un élément de fixation (3) en plastique, le dispositif de fixation (1) étant conçu en deux parties, l'élément de fixation (3) coopérant avec un élément d'amortissement (4) et l'élément d'amortissement (4) étant réceptionné dans l'élément de fixation (3) et l'élément de retenue (5) présentant une lame (15) qui coopère avec un logement (14) du dispositif de fixation (1), **caractérisé en ce que** l'élément de retenue (5) présente une ouverture (6) et le dispositif de fixation une contre-dépouille (17) pour la formation d'un assemblage clipsé et l'ouverture (16) est prévue dans la lame (15) et la contre-dépouille (17) sur un bras à ressort (18) de l'élément de fixation (3).

2. Dispositif de fixation selon la revendication 1, **caractérisé en ce que** l'élément de fixation (3) est une pièce moulée injectée en plastique.

3. Dispositif de fixation selon l'une quelconque des revendications précédentes, **caractérisé en ce que** le dispositif de fixation (1) présente au moins un assemblage clipsé.

4. Dispositif de fixation selon l'une quelconque des revendications précédentes, **caractérisé en ce que** le dispositif de fixation (1) présente une zone cylindrique creuse pour le logement d'une goupille,

5. Dispositif de fixation selon la revendication 4, **caractérisé en ce que** l'élément de fixation (3) est réalisé sensiblement en forme de cylindre.

6. Dispositif de fixation selon la revendication 4 ou 5, **caractérisé en ce que** l'élément d'amortissement est conçu sensiblement en forme de cylindre et est disposé sur le même axe dans l'élément de fixation (3).

7. Dispositif de fixation selon l'une quelconque des revendications précédentes, **caractérisé en ce que** l'élément de fixation (3) présente des ouvertures (10) lesquelles coopèrent avec des saillies (11) de l'élément d'amortissement (4) pour la formation d'un assemblage clipsé et/ou d'une liaison réalisée par conjugaison de forme.

8. Dispositif de fixation selon la revendication 7, **caractérisé en ce que** l'élément de fixation (3) présente au moins deux ouvertures (10).

9. Dispositif de fixation selon la revendication 7 ou 8, **caractérisé en ce que** l'élément de fixation (3) présente trois ouvertures (10) disposées dans une rangée et réparties de façon équidistante sur le pourtour.

10. Dispositif de fixation selon l'une quelconque des revendications précédentes, **caractérisé en ce que** l'élément de retenue (5) est une partie de flexion en métal.

11. Dispositif de fixation selon l'une quelconque des revendications précédentes, **caractérisé en ce que** l'élément de fixation (3) présente une bride (7).

12. Dispositif de fixation selon l'une quelconque des revendications précédentes, **caractérisé en ce que** l'élément d'amortissement (4) présente un bord (8).
